# EUROPEAN PATENT SPECIFICATION

(11) **EP 3 234 319 B1**
(45) Date of publication and mention of the grant of the patent: **02.12.2020**
(21) Application number: 15867008.3
(22) Date of filing: 11.12.2015
(51) Int. Cl.: F02B 63/00, F02B 63/04, B63B 25/00, B65D 85/68, B65D 88/12, E04B 1/344

(54) **GENSET CONTAINERS WITH IMPROVED SERVICE ACCESS AND VENTILATION MODULE**
GENSET-BEHÄLTER MIT VERBESSERTEM DIENSTZUGANG UND LÜFTUNGSMODUL
CONTENANTS POUR GROUPE ÉLECTROGÈNE AVEC UN ACCÈS DE SERVICE AMÉLIORÉ ET MODULE DE VENTILATION

(30) Priority: 11.12.2014 US 201462090750 P
(43) Date of publication of application: 25.10.2017
(73) Proprietor: Cummins Power Generation Ltd. (UK), Ramsgate CT12 5BF (GB)
(72) Inventor: GOLECZKA, Peter A., Minnetonka, Minnesota 55345 (US); READ, Gordon A., Ramsgate Kent CT12 5BF (GB)
(74) Representative: CSY London
(86) International application number: PCT/US2015/065315
(87) International publication number: WO 2016/094833

(56) References cited:
- EP-A2- 1 327 725
- WO-A1-2012/118491
- WO-A1-2014/103060
- US-A- 505 608
- US-A- 5 966 956
- US-A- 5 966 956
- US-A- 6 016 634
- US-A1- 2007 215 398
- US-A1- 2009 194 041
- US-A1- 2011 115 235
- US-A1- 2011 146 751
- US-A1- 2011 259 768
- US-A1- 2014 298 776
- US-B2- 7 221 061
- US-B2- 8 495 869

## Description

The present disclosure relates generally to containers for housing commercial engines and generator sets (gensets).

Large commercial internal combustion engines and gensets are used extensively for physical power production (such as pumps or other shaft power outputs) and power generation and are deployed at a desired deployment site to meet power requirements at the deployment site. Gensets are often shipped to the deployment site in shipping containers or enclosures. The standard shipping containers used by the shipping industry generally follow the International Organization for Standardization (ISO) 6346 standard. Such standard ISO containers generally have a length of about 12.2 meters, a width of about 2.4 meters, and various height allowances. These containers can be stacked compactly in an array on shipping vessels, trains, or trucks to maximize space utilization and minimize shipping cost.

Many conventional gensets have dimensions which fall just within the width requirements of the standard ISO containers. While the internal volume of standard ISO containers is often sufficient to accommodate the genset, no room remains in the container for users (e.g., service personnel) to access the genset, particularly for larger sized high horsepower engines or high kVA output gensets. Such containers or enclosures generally include side opening panels, doors or cutouts to enable service personnel to access and perform maintenance or repair work on the genset.

Gensets can also be shipped in oversized containers which are larger (by being either taller, longer, and/or wider) than the ISO standard containers, for example, have a width of about 3 meters. While such non-ISO compliant containers have sufficient space within their internal volumes for users to access the genset, they require special shipping protocols (e.g., special loading requirements, vessels or other equipment) which can significantly raise the shipping cost thereby, the total cost of ownership, as well as have longer shipping times.

Furthermore, the ventilation, exhaust aftertreatment, or other support or auxiliary equipment associated with gensets generally occupies more space than is available in the enclosure/container and is therefore often shipped loose and/or mounted externally on the genset container. Mounting the ventilation or other auxiliary equipment within the genset container restricts space in the container. Shipping the ventilation and/or auxiliary equipment loosely requires assembly at the deployment site which further raises shipping costs and can lead to operational delays, increased warranty claims, and a need for higher skilled service personnel and time to install and commission the engine or genset.

EP 1 327 725 discloses a container with variable volume for use as a mobile workroom or living space for a variety of applications, such as a mobile surgery or treatment room. A base container 1 can be expanded on at least one side by a rectangular extension 6. The base surface 3 and the top surface 2 of the extension are formed by rigid flat elements which fold out from the side surfaces of the base container. The three side surfaces of the extension are formed by a single, flexible foil 5 which is connected to the two flat elements.

US 2012/0102929 discloses a power system that may be housed inside a single ISO shipping container having standard outside dimensions. The system includes a power source and an internally integrated aftertreatment module that is removable as a unit. The power system may include other removable modules such as a power module. The housing may include one or more access doors.

WO 2012/118491 discloses a stackable containerized modular generator which includes an electrical alternator and engine in a single modular shipping container. The container includes additional components, such as exhaust stack units, for assembly when the generator unit is deployed in the field. Each generator unit includes standard attachment fittings at the upper and lower corners, with additional fittings at intermediate points along the upper and lower edges. The containers may be stacked vertically in a longitudinally staggered array to save space.

According to the present invention there is provided container configured to house a genset for shipping as defined in claim 1.

Preferred features of the invention are recited in the dependent claims.

Embodiments described herein relate generally to containers for housing an engine or genset, and in particular to genset containers that have movable sidewalls to increase a width of the container or can be moved or removed to provide wide and general access to the enclosed engine/genset, and to ventilation modules that can be disposed on genset containers.

In one set of embodiments, a container for a genset comprises a housing defining an internal volume. The housing comprises a floor, a roof and a plurality of sidewalls At least one sidewall of the plurality of sidewalls is movable relative to the roof and the floor between a first configuration, in which a portion of the housing has a first width, and a second configuration, in which the portion of the housing has a second width. The second width is greater than the first width. The first width is not sufficient for a user to easily enter the internal volume of the housing for accessing a genset disposed within the housing, and the second width is sufficient for the user to enter the internal volume for accessing the genset. In some embodiments, the first width is generally compliant with ISO container width standards.

The housing further comprises a first slat pivotally coupled to the floor, and a second slat slidably coupled to the roof. An end of the second slat is fixedly coupled to an end of the sidewall proximal to the roof. In the first configuration, the first slat is disposed in a normal orientation to the floor, and the second slat is disposed parallel to and overlapping the roof. Furthermore, the sidewall is disposed proximal to the floor and the roof such that the portion of the housing has the first width. In the second configuration, the first slat is disposed parallel to the floor, does not overlap the floor and forms a work platform adjacent to the floor. Moreover, the second slat is disposed parallel to the roof, does not overlap the roof and forms a work platform roof adjacent to the roof of the housing such that the sidewall is disposed distal to the roof and floor such that the portion of the housing has the second width.

In another embodiment, the at least one sidewall of the plurality of sidewalls comprises a panel pivotally coupled to the floor. In the first configuration, the panel is disposed in a normal orientation relative to the floor such that the portion of the housing has the first width. In the second configuration, the panel is disposed parallel to the floor such that an opening is defined in the sidewall and the panel forms a work platform such that the portion of the housing has the second width. An enclosure is disposed over the opening in the second configuration to provide an enclosed work area around the work platform adjacent to the internal volume of the housing.

In an additional set of embodiments, a ventilation module for a genset container comprises a housing defining an internal volume. The housing comprises a floor structured to be disposed on a roof of the genset container, a roof, a plurality of sidewalls, and a discharge plenum. The discharge plenum includes an inlet, a plenum portion and an outlet. The plenum portion is in fluidic communication with an internal volume of the genset container via the inlet. The discharge plenum is structured to discharge air from the internal volume of the genset container into the environment via the outlet.

In particular embodiments, the ventilation module further comprises a duct disposed within the internal volume of the housing. A first end of the duct in fluidic communication with the discharge plenum. A second end of the duct is in fluidic communication with an intake plenum of at least one intake fan disposed in the genset container. The duct is structured to receive at least a portion of the air being discharged by the discharge plenum and recirculate the portion of the warmed air to the intake plenum. In another embodiment, at least a portion of the plurality of sidewalls of the housing include a plurality of openings which are structured to communicate air into the internal volume of the housing.

In some embodiments, a genset assembly comprises a genset and a container defining an internal volume within which the genset is positioned. The container includes a container floor, a container roof and a plurality of container sidewalls. At least one container sidewall of the plurality of container sidewalls is movable relative to the floor and the roof between a first configuration in which a portion of the container has a first width, and a second configuration, in which the portion of the container has a second width. The second width is greater than the first width. A ventilation module is positioned on the container roof of the container. The ventilation module comprises a housing defining a housing internal volume. The housing includes a housing floor positioned on the container roof, a housing roof, a plurality of housing sidewalls and a discharge plenum positioned in the housing internal volume. The discharge plenum includes an inlet, a plenum portion and an outlet. The plenum portion is in fluidic communication with the internal volume of the container via the inlet. The discharge plenum is structured to discharge air from the internal volume of the container into the environment via the outlet.

It should be appreciated that the scope of the current invention is defined by the appended claims.

### Brief Description of Drawings

The foregoing and other features of the present disclosure will become more fully apparent from the following description and appended claims, taken in conjunction with the accompanying drawings. Understanding that these drawings depict only several implementations in accordance with the disclosure and are therefore, not to be considered limiting of its scope, the disclosure will be described with additional specificity and detail through use of the accompanying drawings.
FIG. 1 is a perspective view of a container for a genset in a first configuration, according to an example not according to the current invention.
FIG. 2 is a perspective view of the container of FIG. 1 moving from the first configuration into a second configuration.
FIG. 3 is a perspective view of the container of FIG. 1 in the second configuration.
FIG. 4A is a side view of the container of FIG. 3 in the second configuration showing a genset disposed within the container, and FIG. 4B is the side view of the container of FIG. 4A with a sidewall of the container removed.
FIG. 5 is a perspective view of another example not according to the current invention of a container for housing a genset with a panel of a sidewall of the container in a second configuration and an enclosure disposed about an opening in the sidewall.
FIG. 6 is a perspective view of yet another example not according to the current invention of a container for housing a genset with panels of a sidewall of the container in a second configuration and an enclosure disposed about an opening in the sidewall.
FIG. 7 is another perspective view of the container of FIG. 6.
FIG. 7A is a perspective view of another example of a container that includes a wide open service access defined on a sidewall of a container and that includes reinforced supports in the service access.
FIG. 7B is a side view of still another example of a container that includes a wide side access with conventional supports.
FIG. 8 is a perspective view of an embodiment of a container for housing a genset with sidewalls of the container in a first embodiment.
FIG. 9 is a top cross-section view of the container of FIG. 8
FIG. 10 is a back cross-section view of the container of FIG. 8.
FIG. 11 is a back cross-section view of the container of FIG. 8 with the sidewalls of the container in a second configuration.
FIG. 12 is a top cross-section view of the container of FIG. 11.
FIG. 13 is a perspective view of the container of FIG. 11.
FIG. 14 is a back cross-section view of the container of FIG. 8 with a first set of intake louvers in a first configuration and a second set of intake louvers in a second configuration.
FIG. 15 is perspective view of a ventilation module disposed on a roof of a container for housing gensets, according to an embodiment.
FIG. 16 is another perspective view of the ventilation module with a sidewall of the container removed to show a genset disposed within the container.
FIG. 17 is a top view of the ventilation module of FIG. 15, showing a roof of the ventilation module.
FIG. 18 is a side cross-section view of the ventilation module of FIG. 15, with a genset according to one embodiment disposed within an internal volume of the container.
FIG. 19 is a side cross-section view of the ventilation module of FIG. 15, with another embodiment of a genset disposed within an internal volume of the container.
Fig. 20 is a side cross-section view of the ventilation module of FIG. 15, with yet another embodiment of a genset disposed within an internal volume of the container.
FIG. 21 is a side cross-section view of a ventilation module disposed on a container and including a recirculation duct, according to an embodiment.

Reference is made to the accompanying drawings throughout the following detailed description. In the drawings, similar symbols typically identify similar components, unless context dictates otherwise. The illustrative implementations described in the detailed description and drawings are not meant to be limiting. Other implementations may be utilized, and other changes may be made within the scope of the appended claims.

### Detailed Description of Various Embodiments

Embodiments described herein relate generally to containers for housing containerized large commercial internal combustion engines, such as a genset, and in particular to engine and genset containers that have movable or removable sidewalls to increase a width of the container or provide broad horizontal open access to the enclosed engine or genset, and to ventilation modules that can be disposed on genset containers.

Embodiment of the present invention include various side access panel configurations enabling broad side access to engine or genset containerized enclosures for service and maintenance access by means of horizontally hinged side panels that fold to deploy out to form roofs, floors and side walls of side workspace areas, sideways sliding side panels that slide along the length of the container, or expanding sliding side panels that expand the width of the container side panels, or roll up into the roof to provide access. In several embodiments, the access panels can be redeployed on site to provide walkways, workspace access, access ramps, or enclosed expanded side workspace around the engine or genset.

Embodiments of genset containers described herein may provide several advantages including, for example: (1) providing genset containers with movable sidewalls that allow the width of the container to be increased on demand or removed to swap on differing door configurations or provide general broad access to maintain the enclosed engine/genset; (2) enabling the shipping of the container in a first configuration in which the container has a width corresponding to an ISO container, thereby facilitating shipping and reducing cost; (3) allowing increase in the width of the container on demand, for example at a deployment site, to provide space, walkways and/or a service annex in the container adjacent to the genset such that users or service personnel can access the genset; and (4) protecting the personnel and genset from outdoor elements such as heat, cold, water, or dust, improving service access, improving working conditions, increasing safety and satisfaction reducing time required for and improving the quality of service repair, thereby reducing total owner shipping cost.

Embodiments of ventilation modules for genset or engine containers described herein may provide several benefits including, for example: (1) providing a ventilation module for genset containers which can be coupled to any genset container that can include any type of genset disposed therein without any modifications; (2) disposing a discharge plenum for the genset container in the ventilation module thus increasing the space available within the genset container; (3) disposing the discharge plenum such that the discharge plenum exploits natural convection, thereby improving heat extraction directly from above the heat source (i.e., the genset); and (4) sizing the discharge plenum such that any type or shape of exhaust piping or otherwise configuration can be accommodated within the discharge plenum and coupled with a standard aftertreatment system and/or a silencer disposed above the discharge plenum.

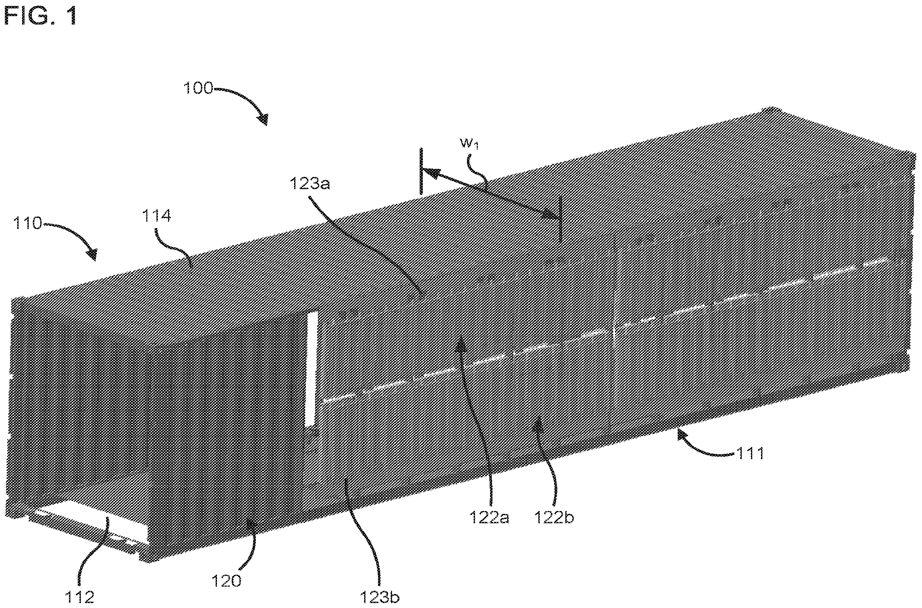

FIG. 1 shows an example not according to the current invention of a container 100 for a genset. The container 100 can be moved between a first configuration and a second configuration to increase the internal volume of the container 100, as described herein.

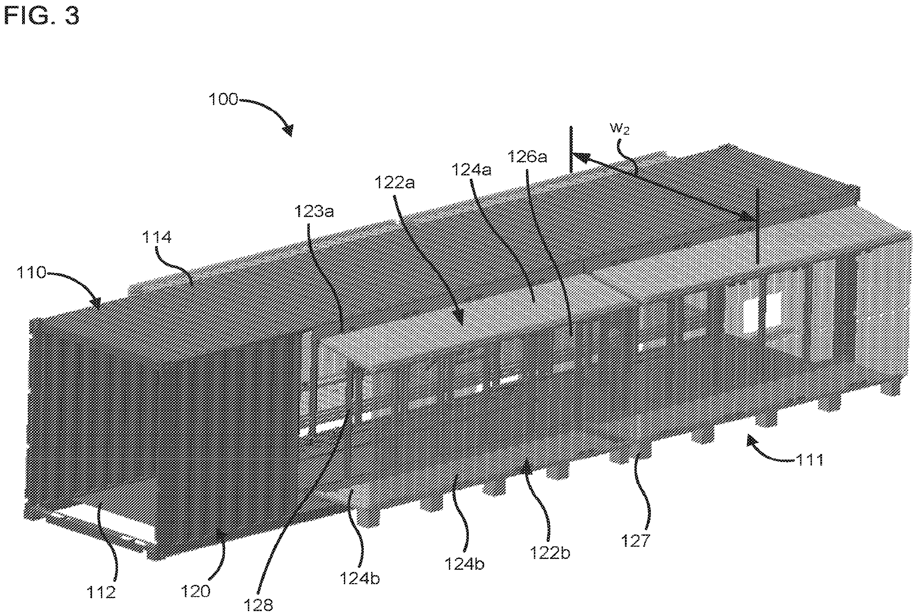

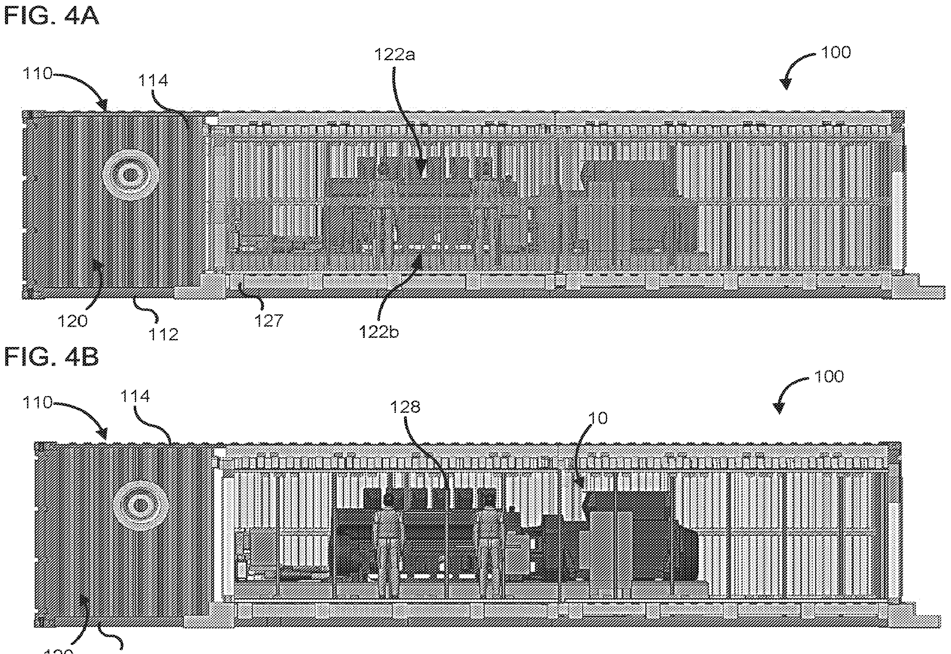

The container 100 includes a housing 110 which defines an internal volume. The housing includes a floor 112, a roof 114, and a plurality of sidewalls 120. The housing 110 can be formed from any suitable material, for example, corrugated weathering steel. The sidewalls 120 of the housing 110 are moveable between a first configuration in which a portion 111 of the housing 110 has a first width w₁ as shown in FIG. 1, and a second configuration in which the portion 111 of the housing 110 has a second width w₂ as shown in FIG. 3 which is greater than the first width. It should be understood that, when the term "portion of the housing" is used herein, this term should also be interpreted to cover the entirety of the housing as well, meaning that it is possible that the width of the entirety of the housing may change. The first width is not sufficient for a user to enter the internal volume of the housing 110 for accessing a genset 10 (FIGS. 4A and 4B) disposed within the housing 110. In contrast, the second width is sufficient for the user to enter the internal volume and access the genset 10. In particular embodiments, the first width can be the same as the width of a standard ISO container, for example, about 2.4 meters. Moreover, the second width is larger than the width of the ISO container, for example, about 3.2 meters.

Expanding further, the sidewall 120 comprises a first panel 122a and a second panel 122b. The first panel 122a includes a first panel first portion 124a and a first panel second portion 126a. The first panel first portion 124a is pivotally coupled to the roof 114 of the housing 110 via hinges 123a. Furthermore, the first panel second portion 126a is pivotally coupled (e.g., via hinges) to a first end of the first panel first portion 124a which is distal from the roof 114. Thus, the first panel first portion 124a is free to move about its pivot mounts relative to the roof 114, and the first panel second portion 126a is free to move about its pivot mounts relative to the first portion 124a such that the first panel 122a can be moved between the first and the second configuration as described herein. In some embodiments, seals may be provides around the hinges. The seals may include weatherproof seals, for example rubber seals, gaskets, silicone seals or any other suitable seals structured to prevent seal the hinges from the outside environments. For example, the seals may include hermetic seals which prevent outside heat, cold or air from entering the internal volume defined by the housing 110.

The second panel 122b also includes a second panel first portion 124b and a second panel second portion 126b. The second panel first portion 124b is pivotally coupled to the floor 112 of the container 100 via hinges 123b. Furthermore, the second panel second portion 126b is pivotally coupled (e.g., via hinges) to a second end of the second panel second portion 124b which is distal from the floor 112. Thus, the second panel first portion 124b is free to move about its pivot mounts relative to the floor 112, and the second panel second portion 126b is free to move about its pivot mounts relative to the second panel first portion 124b such that the second panel 122b can be moved between the first and the second configuration as described herein. In other words, each of the first panel 122a and the second panel 122b is a bi-fold panel that can be folded over itself. It is to be noted that the first panel second portion 126a and the second panel second portion 126b can be divided into sections to allow for hinged doors that are pivotable at the top and bottom and that can be opened separately from the whole panel (126a, 126b) to provide access, while enabling the lower section of second panel second portion 126b (or alternatively, the whole second panel 122b if an undivided panel) to act as an access ramp for heavy equipment, such as forklifts.

FIG. 1 shows the sidewall 120 in the first configuration. In the first configuration, the first panel first portion 124a and the first panel second portion 126a of the first panel 122a are folded over each other and disposed in a normal orientation relative to the roof 114 such that the first end of the first panel first portion 124a of the first panel 122a is proximal to the floor 112. Moreover, the second panel first portion 124b and the second panel second portion 126b of the second panel 122b are folded over each other and disposed in a normal orientation relative to the floor 112 such that the second end of the second panel first portion 124b of the second panel 122b is proximal to the roof 114. Furthermore, the first end of the first panel first portion 124a of the first panel 122a and the second end of the second panel first portion 124b of the second panel 122b are proximal to each other, and form at least a portion of the sidewall 120 of the housing 110.

As shown in FIG. 1, the first panel 122a and the second panel 122b are flush with the sidewall 120 in the first configuration such that the portion 111 of the housing 110 has the first width w₁. The first width w₁ can be the same as the width of a standard ISO container, for example, about 2.4 meters. A length and a height of the container 100 can also be the same as those of a standard ISO container (e.g., a length of about 6.1 meters, 12.2 meters, 14.6 meters or about 16.2 meters and a height of about 2.59 meters, 2.9 meters, or about 3.2 meters). Thus, the container 110 can be shipped in the first configuration on a shipping vessel and/or using equipment configured to ship standard ISO containers thereby reducing cost. It is to be noted that shipping bolts can be placed to extend through panels 122a and 122b, for example around the edges, to secure the panels to the sidewall 120, reinforcing the container 100 for shipping and preventing accidental deployment.

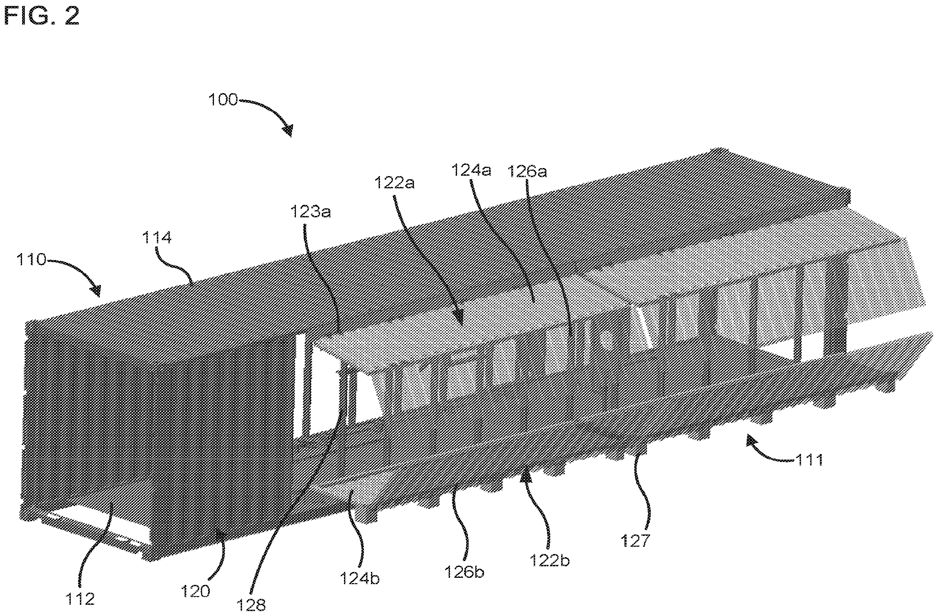

FIG. 2 shows the sidewall 120 of the container 100 moving from the first configuration to the second configuration, and FIG. 3 shows the sidewall 120 in the second configuration with floor support blocks placed or feet extended. In the second configuration, the second panel first portion 124b is oriented parallel to the floor 122 and forms a work platform which extends beyond the width of the floor 112 or otherwise the first width of the housing 110. Furthermore, the first panel first portion 124a is oriented parallel to the roof 114 to form a work platform roof disposed over the work platform formed by the second panel first portion 124b.

In some embodiments, the first panel first portion 124a may be inclined at a small angle with respect to the roof 114 (e.g., at an angle of 2, 4, 6, 8, 10, 12, 14 or 15 degrees inclusive of all ranges and values therebetween), i.e., be sloped with respect to the roof 114 in the second configuration. The slope defined by the first panel first portion 124a may serve as a rain run off to prevent water from accumulating on the work platform roof formed by the first panel first portion 124a in the second configuration.

Moreover, the first panel second portion 126a and the second panel second portion 126b are oriented perpendicular to each of the roof 114 and the floor 112 to form a sidewall of the work platform formed by the second panel first portion 124b. The movement of the first panel 122a and the second panel 122b of the sidewall 120 increases the width of the portion 111 of the housing 110 to the second width w₂ (e.g., about 3.2 meters) which is larger than the first width w₁ (e.g., about 2.4 meters). In this manner, the container 100 can be shipped in the configuration of a standard ISO container. Once the container 100 is deployed on-site, the width of the container 100 can be increased by moving the sidewall 120 into the second configuration. In this manner, the inner volume of the container 100 is increased and a work platform for service personnel is provided within the container 100. The size and/or location of the panels 122a and 122b can be varied based on the type of genset disposed within the internal volume of the container 100 to improve service access. In some embodiments the second portion (126a and 126b) of panels 122a and 122b can be omitted and a simple roof and floor formed by first portions 124a and 124b. If desired the work place can be enclosed on site by attachable rigid or flexible side panels or doors.

FIGS. 4A and 4B show service personnel accessing the work platform formed by the second panel first portion 124b to perform maintenance work on a genset 10 disposed in the internal volume of the housing 110. The second panel first portion 124b can be supported by supports 127 (e.g., self-leveling jack stands, bricks, timber, or any other support) such that the second panel first portion 124b can support the weight of the service personnel. A plurality of posts 128 are also disposed in the internal volume. The posts 128 extend from the floor 112 to the roof 114. The posts 128 are included in the structure of the housing 110 and are structured to support the roof 114.

Doors can also be disposed on either side of the first panel 122a and the second panel 122b to provide access entrances onto the work platform and form an enclosure around the work platform. Steps can be disposed proximal to the doors. Furthermore, windows or access doors can be defined in the first panel 122a (e.g., in the first panel second portion 126a), the second panel (e.g., in the second panel second portion 126b), and/or the doors. The first panel 122a and the second panel 122b can be latched or bolted into place. Sound attenuation panels can be disposed on the first panel 122a and/or the second panel 122b to attenuate a sound produced by the genset 10. Moreover, weatherproof seals can be disposed at the hinges 123a and the 123b that can provide weather and environmental protection.

In some embodiments, the first panel 122a and the second panel 122b can be deployed or otherwise urged into the second configuration only when extensive service of the genset 10 is required. In such embodiments, hydraulic struts can be provided in the housing 110 to facilitate moving the first panel 122a and/or the second panel 122 between the first and second configurations. If the container 100 needs to be shipped or otherwise moved, the first panel 122a and the second panel 122b can be urged into the first configuration and the container 100 can be shipped using the same protocols as a standard ISO container. In other embodiments, the first panel 122a and the second panel 122b can be permanently deployed in the second configuration once the container 100 is installed on site.

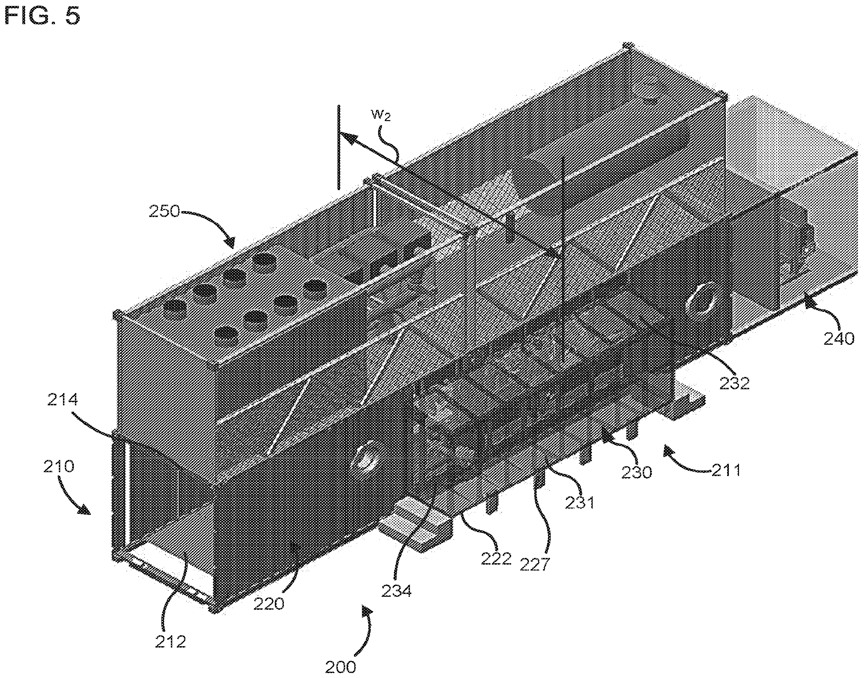

FIG. 5 shows a perspective view of container 200 for housing a genset, according to another embodiment. The container 200 comprises a housing 210 defining an internal volume for housing the genset. The housing 210 includes a floor 212, a roof 214, and a plurality of sidewalls 220. At least one of the plurality of sidewalls 220 is moveable between a first configuration in which the container 200 has a first width which can be the same as the width of a standard ISO container (e.g., about 2.4 meters), and a second configuration in which the container 100 has a second width w₂ larger than the first width. A cooling module 250 is disposed on the container 200 and can be substantially similar to any cooling module described herein (e.g., the ventilation module 450 and 550 described below).

The sidewall 220 includes a panel 222 pivotally coupled to the floor 212. In the first configuration (not shown), the panel 222 is disposed in a normal orientation relative to the floor 212 and the roof 214. In other words, the panel 222 is flush with sidewall 220 such that a portion 211 of the housing 210 has the first width (e.g., about 2.4 meters).

In the second configuration, the panel 222 can be pivotally moved relative to the floor 212 such that the panel 222 is disposed parallel to the floor or roof such that the portion 211 of the housing 210 has the second width w₂, and an opening is defined in the sidewall 220. The panel 222 forms a working platform or roof enabling access by service personnel to perform repair or maintenance operations on a genset disposed in the internal volume of the housing 210. The plurality of supports 227 are disposed between a surface on which the container 200 is disposed and the panel 222, and are structured to support the panel 222 in the second configuration.

In various other embodiments, the container 200 or top mount ventilation modules (described below) may include a separate horizontally hinged floor panel, in addition to or supplemental to panel 222, that drops down when deployed to form a horizontal access walkway along the sides or around the periphery of the container 200. This walkway can be retained horizontally by supports from below or chains or struts from the sidewall 220. It is noted that this walkway is particularly advantageous in vertically stacked genset-genset or top mounted ventilation/auxiliary equipment module configurations may further include deployable guard rails.

An enclosure 230 is disposed around the opening in the sidewall 220 and coupled to the platform 222 and at least a portion of the sidewall 222 surrounding the opening. One or more posts and/or removable diagonal braces can be disposed in the enclosure 230 to support the enclosure 230. The enclosure 230 thus forms an enclosed space around the working platform formed by the panel 222 adjacent to the genset. The enclosed space serves as a service annex for service personnel to perform maintenance work on the genset.

In particular embodiments, the enclosure 230 can be formed from a vinyl fabric or any other weatherproof material. The enclosure 230 includes a plurality of windows 231 and also defines a roof 232 or floor 212 of the working platform formed by the panel 222. The enclosure 230 can include snaps, hooks such that the enclosure 230 can be snapped on to corresponding hooks or snaps disposed on the sidewall 220, the roof 214, and/or the floor 212 of the container 200. The enclosure 230 also includes a door 234, for example, a zip in door.

A control module 240 is also coupled to the container 200. In some embodiments, the control module 240 can be formed using the same materials as the enclosure 230. Control instrumentation can be disposed in the control module 240 for controlling the operation of the genset.

Examples not according to the present invention include, but are not limited to, engine and genset enclosures that utilize side panels 122, 222 that can variously be horizontally hinged to fold up to form a roof panel, a floor panel, or both. In yet other embodiments, the side panels 122, 222 can be slid sideways along sidewall 220 to open the sidewall and provide maintenance access to the enclosed engine or genset. In a further embodiment, the side panel 122, 222 is formed by a roll-up access door that is formed to recess into the roof of the container when opened. A roof or floor for workspace can be provided by optional horizontally hinged panels 124, 126 as described above, or a deployable rigid or flexible canopy and sidewalls. In yet a further embodiment, the side panels 122, 222, or a frame holding the side panels 122, 222, are bolted onto the container 200 to form an integral part of the sidewall 220. This enables differing configured or sized side panels 122, 222 of embodiments of the present invention to be swapped onto engine or genset containers 200 to allow quick changes in container configuration (such as horizontally hinged, roll-up, sliding, workspace forming, walkways, conventional vertically hinged access doors, etc.) without requiring container 200 redesign.

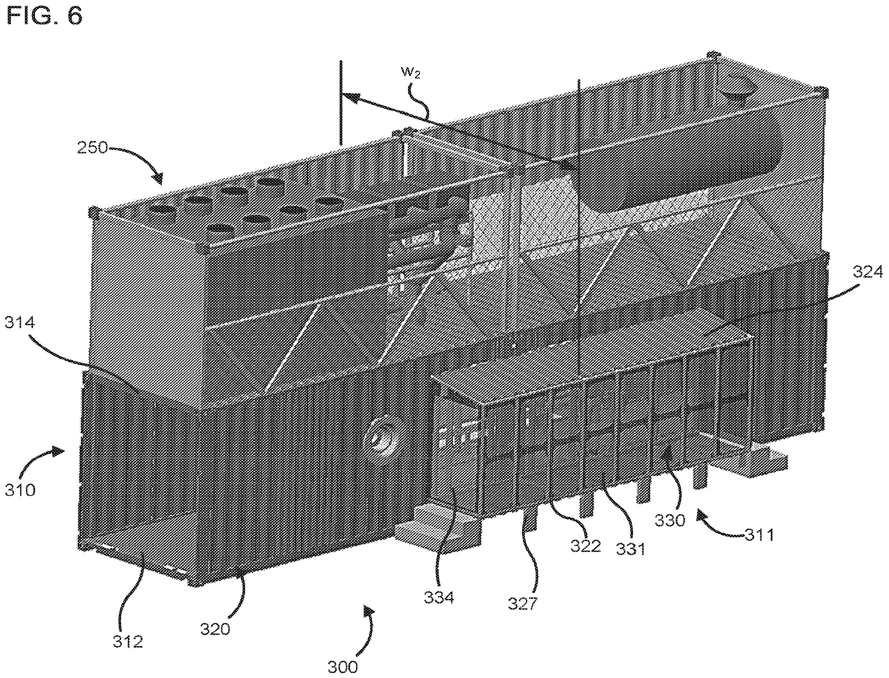

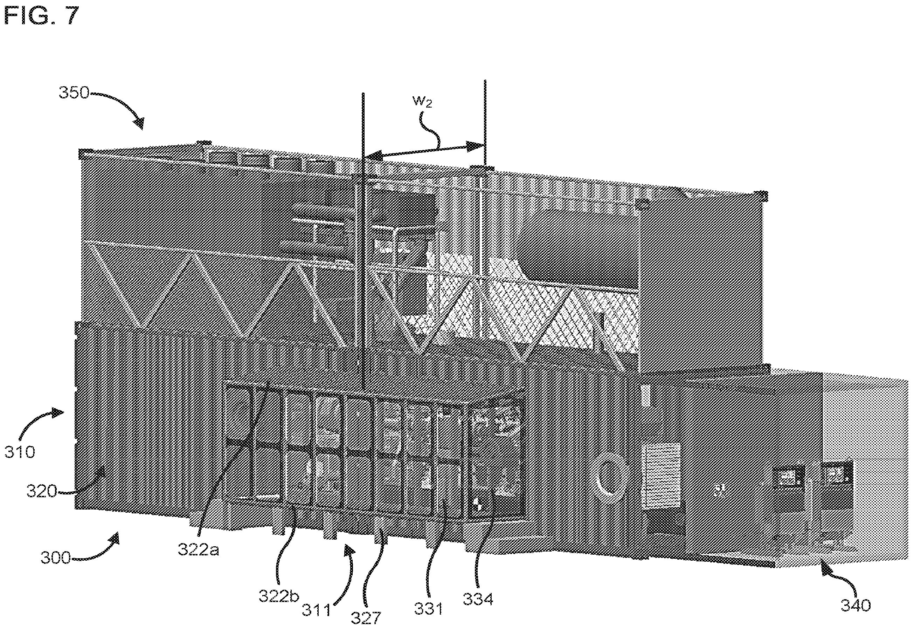

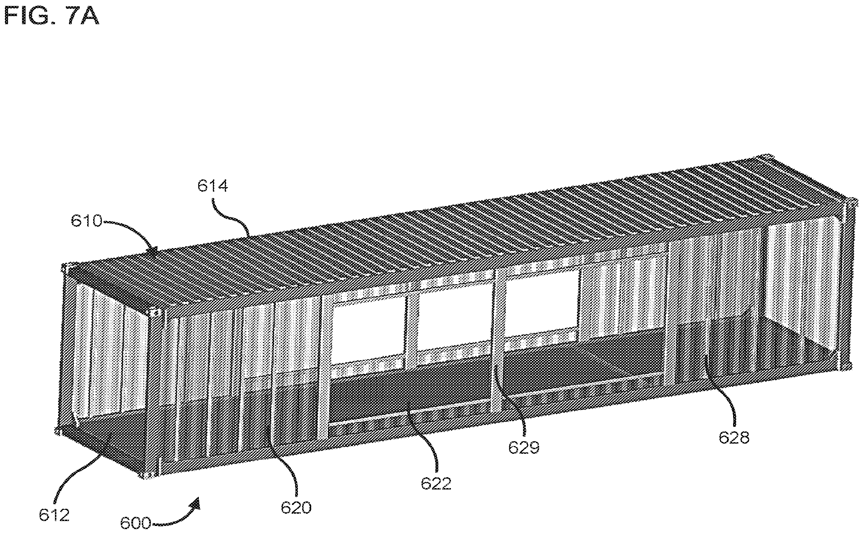

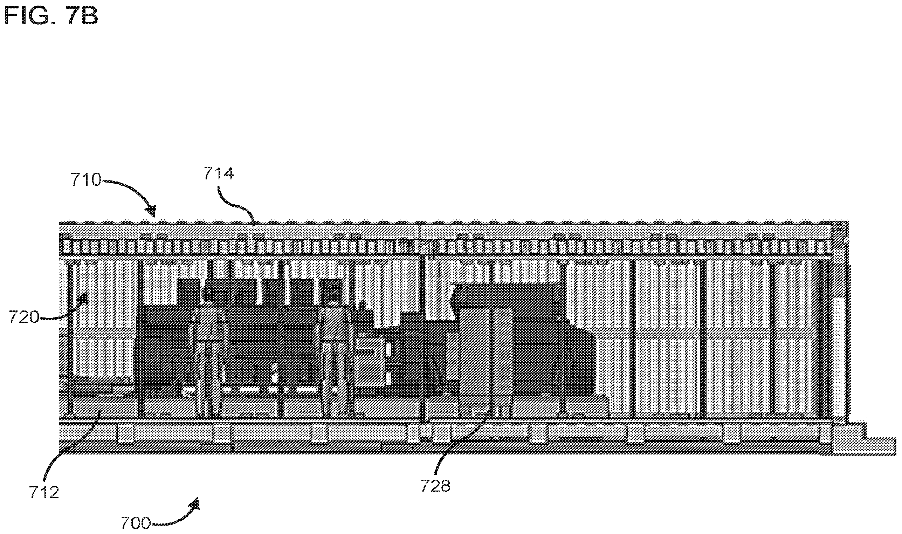

FIGS. 6 and 7 show a container 300 for housing a genset, according to yet another example not according to the current invention. The container 300 includes a housing 310 that defines an internal volume for housing a genset. The housing 310 includes a floor 312, a roof 314, and a plurality of sidewalls 320. At least one of the plurality of sidewalls 320 is moveable between a first configuration in which the container 300 has a first width which is the same as the width of a standard ISO container (e.g., about 2.4 meters), and a second configuration in which the container 300 has a second width w₂ larger than the first width. A cooling module 350 is disposed on the container 300 and can be substantially similar to any cooling module described herein (e.g., the ventilation module 450 and 550 described below).

Similar to the container 200, the sidewall 320 includes a first panel 322 pivotally coupled to the floor 312. The sidewall 320 also includes a second panel 324 pivotally coupled to the roof 314. In the first configuration (not shown), the first panel 322 and the second panel 324 are disposed in a normal orientation relative to the floor 312 and the roof 314. In other words, the first panel 322 and the second panel 324 are flush with sidewall 320 such that a portion 311 of the housing 310 has the first width (e.g., about 2.4 meters).

In the second configuration, the first panel 322 is moved pivotally relative to the floor 312 such that the first panel 322 is oriented parallel to the floor 312. Furthermore, the second panel 324 is also moved pivotally relative to the roof 314 such the second panel 324 is oriented parallel to the roof 314 and the portion 311 of the housing 310 has the second width w₂. Furthermore, an opening is defined in the sidewall 320. The first panel 322 forms a working platform which can be accessed by service personnel to perform repair or maintenance operations on a genset disposed in the internal volume of the housing 310. Moreover, the second panel 324 forms working platform roof of the working platform formed by the first panel 322. A plurality of supports 327 are disposed between a surface on which the container 300 is disposed and the first panel 322. The supports 327 are structured to support the first panel 322 in the second configuration.

An enclosure 330 is disposed around the opening in the sidewall 320 and coupled to the first panel 322, the second panel 322, and at least a portion of the sidewall 320 surrounding the opening. One or more posts can be disposed in the enclosure 330 to support the enclosure 330. The enclosure 330 thus forms an enclosed working platform adjacent to the genset for service personnel to perform maintenance work. The enclosure 330 includes windows 331 and doors 334. The enclosure 330 can be formed from substantially the same materials as the enclosure 230 or of other rigid or flexible material. Furthermore, the enclosure 330 can be coupled to first panel 322, the second panel 324, or the sidewall 320 using hooks or snaps as described before.

A control module 340 is also coupled to the container 300. The control module 340 can be substantially similar to the control module 240 and therefore not described in further detail herein.

In some embodiments, a container or enclosure for housing a genset can include a wide service access entrance for service personnel. FIG. 7A shows a container 600 for housing a genset, for example the genset 10 or any other genset described herein. The container 600 includes a housing 610 that defines an internal volume for housing a genset. The housing 610 includes a floor 612, a roof 614 and a plurality of sidewalls 620. Conventional supports 628 are disposed along or within the sidewall 620 of the container 600 to support the roof 614 of the housing 610.

At least one of the plurality of sidewalls 620 defines a service access 622 for allowing service personnel to access the inner volume defined by the housing to service or otherwise maintain the genset disposed in the housing 610. A plurality of reinforced supports 629 are disposed within the service access 622 to support a portion of the roof 614 disposed over the service access 622. The reinforced supports 629 have a greater structural strength than the conventional supports 628. Thus, a fewer number of the reinforced supports 629 can be used within the service access 622 relative to conventional supports 628 while still providing a desired structural strength sufficient to support the portion of the roof 614 disposed over the service access 622. In this manner, a wider service entrance can be formed for the service personnel to access the inner volume of the housing 610. As shown in FIG. 7A, the service access 622 may be defined such that small panels are positioned above the service access proximate to the roof 614 and below the service access 622 proximate to the floor 612. The small panels may serve to add stiffness to the sidewall 620.

FIG. 7B shows another example of a container 700 for housing a genset (e.g., the genset 10). The container 700 comprises a housing 710 that includes a floor 712, a roof 714 and a plurality of sidewalls 720. At least a portion of one or more of the plurality of sidewalls 720 can define, or be removed to define a service access for service personnel to access the genset disposed in the housing 710. For example, an entire sidewall of the plurality of sidewalls 720 can be removed to define the service access. A plurality of conventional supports 728 are disposed along the service access. The conventional supports 728 extend from the floor 712 to the roof 714 and provide sufficient structural strength to support the roof 714.

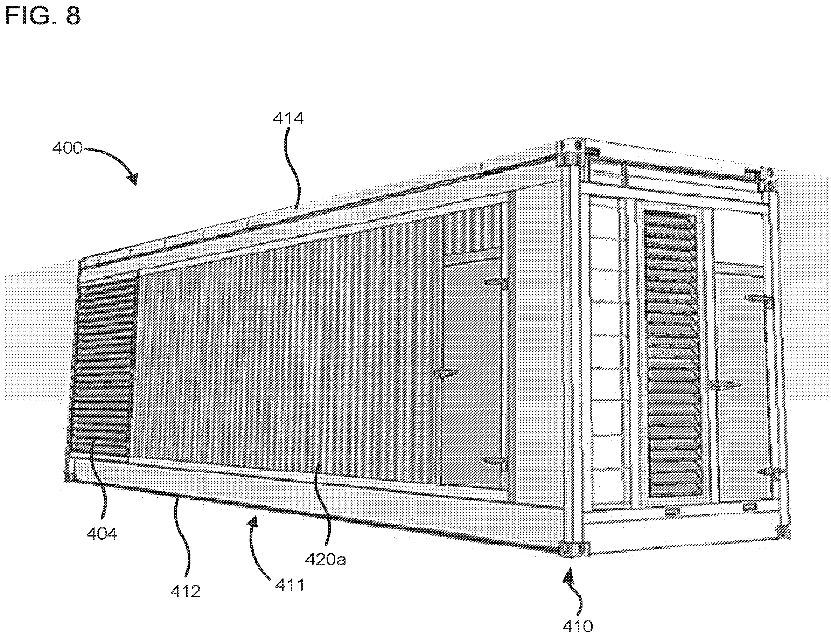

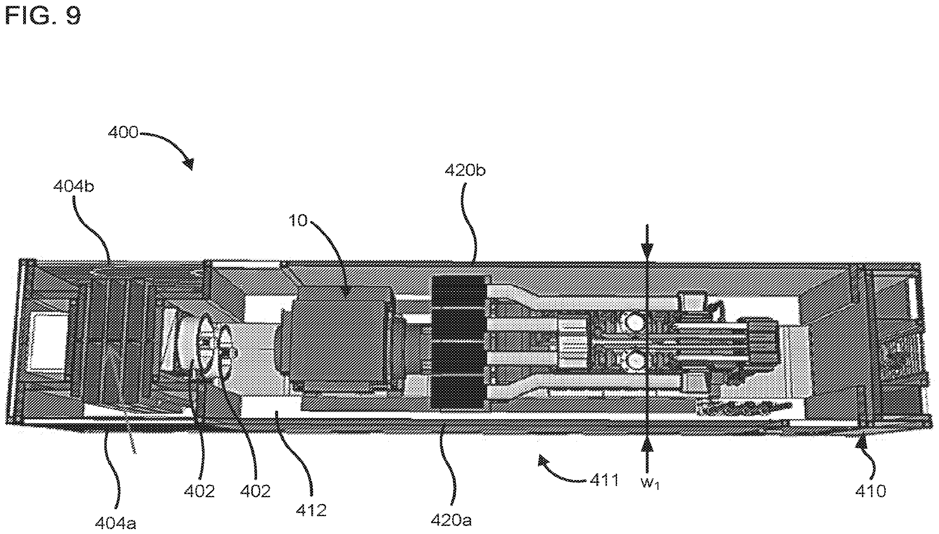

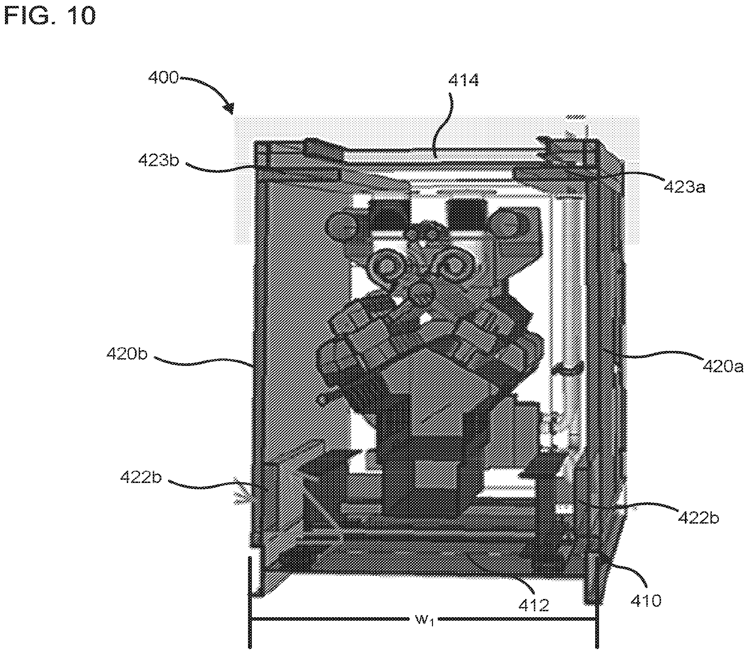

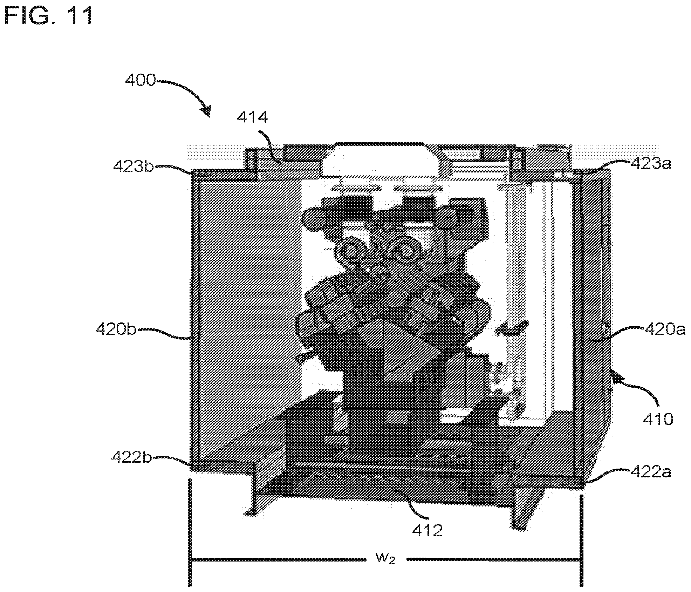

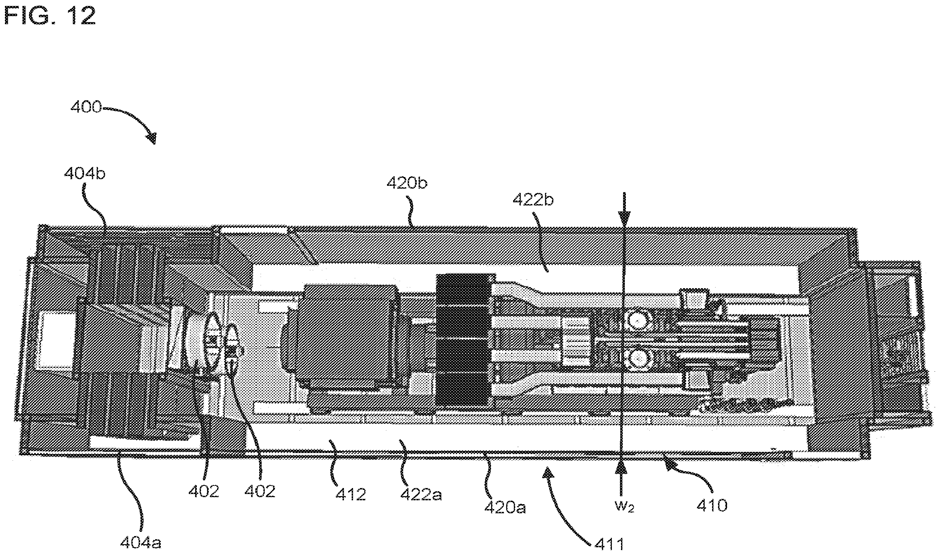

FIGS. 8-14 shows various views of an embodiment of a container 400 for housing gensets. The container 400 includes a housing 410 that defines an internal volume. The housing 410 includes a floor 412, a roof 414, and a plurality of sidewalls 420. The plurality of sidewalls 420 are moveable from a first configuration in which the container 400 has a first width w₁ (FIG. 10) which can be the same as the width of a standard ISO container (e.g., about 2.4 meters), to a second configuration in which the container 400 has a second width w₂ (FIG. 11) larger than the first width w₁.

The container 400 includes a housing 410 that defines an internal volume. A genset 10 is disposed in the internal volume. The housing 410 includes a floor 412, a roof 414, a first sidewall 420a and a second sidewall 420b (collectively referred to herein as the "sidewalls 420"). A pair of inlet fans 402 are disposed in the internal volume defined by the housing 410. The inlet fans 402 are configured to intake air from the outside environment through a first louver 404a and a second louver 404b (collectively referred to herein as the "louvers 404"). The first louver 404a is disposed on the first sidewall 420a and the second louver 404b is disposed in the second sidewall 420b, and communicate the air into the inner volume of the housing 410. Filters and/or sound attenuators can be disposed in a passageway defined between the louvers 404 and the inlet fans 402, which are configured to remove particles or debris from the intake air, and suppress sound produced by the genset 10, respectively.

As shown in FIG. 10, the housing 410 includes a pair of first slats 422a and 422b pivotally coupled to the floor 412 proximal to the first sidewall 420a and the second sidewall 420b, respectively. The housing 410 also includes a pair of second slats 423a and 423b slidably coupled to the roof 414 proximal to the first sidewall 420a and the second sidewall 420b, respectively. An end of the second slats 423a and 423b is fixedly coupled to an end of the sidewalls 420 proximal to the roof 414 as shown in FIG. 10.

FIGS. 8-10 show the sidewalls 420 of the housing 410 of the container 400 in a first configuration. In the first configuration, the first slats 422a and 422b are disposed in a normal orientation relative to the floor 412. Furthermore, the second slats 423a and 423b are disposed parallel to and overlapping the roof 414, such that the sidewalls 420 are disposed proximal to the floor 412 and the roof 414. A portion 411 of the housing 410 of the container 400 has the first width w₁ in the first configuration which can be about the same as the width of a standard ISO container (e.g., about 2.4 meters).

To urge the sidewalls 420 into the second configuration shown in FIGS. 11-13, the first slats 422a and 422b are moved pivotally relative to the floor 412 such that the first slats 422a and 422b are disposed parallel to the floor 412 and form work platforms adjacent to and either sides of the floor 412. Furthermore, the second slats 423a and 423b are slidably moved relative to the roof 414 such that second slats 423a and 423b are disposed parallel to the roof 414 but do not overlap the roof 414. In this manner, the second slats 423a and 423b form work platform roofs of the work platform formed by the first slats 422a and 422b, adjacent to the roof 414 of the housing 410.

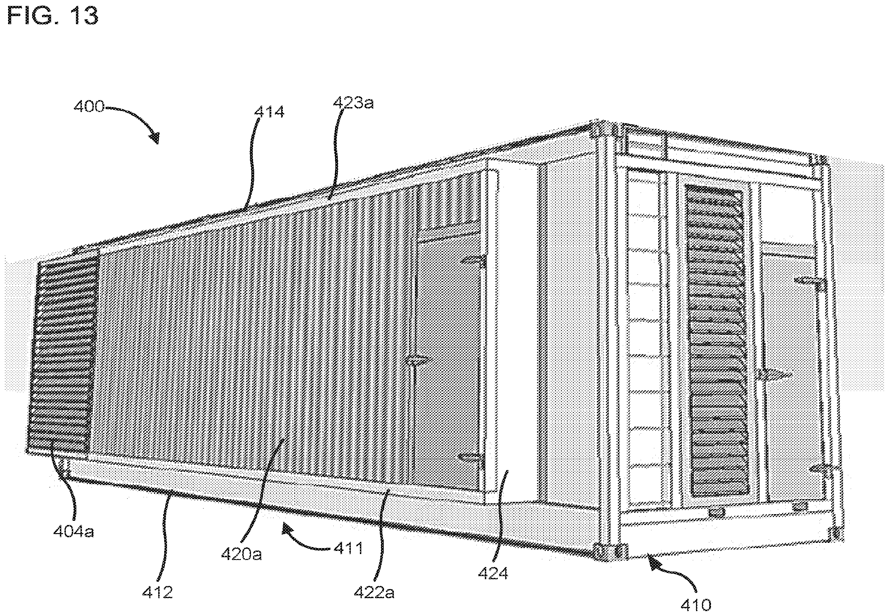

The movements of the first slats 422a and 422b and the second slats 423a and 423b also moves the sidewalls 420 distal relative to the floor 412 and the roof 414 such that the portion 411 of the housing 410 has the second width w₂ (FIG. 11). In particular embodiments, panels 424 (FIG. 13) can be disposed between the floor 412 and the roof 414 on each end of the sidewalls 420 not in contact with the floor 412 and the roof 414. The panels 424 can be coupled to the floor 412, the roof 414, and/or the sidewalls 420 in the second configuration. In this manner, the ends of the sidewalls 420 can be sealed or otherwise enclosed.

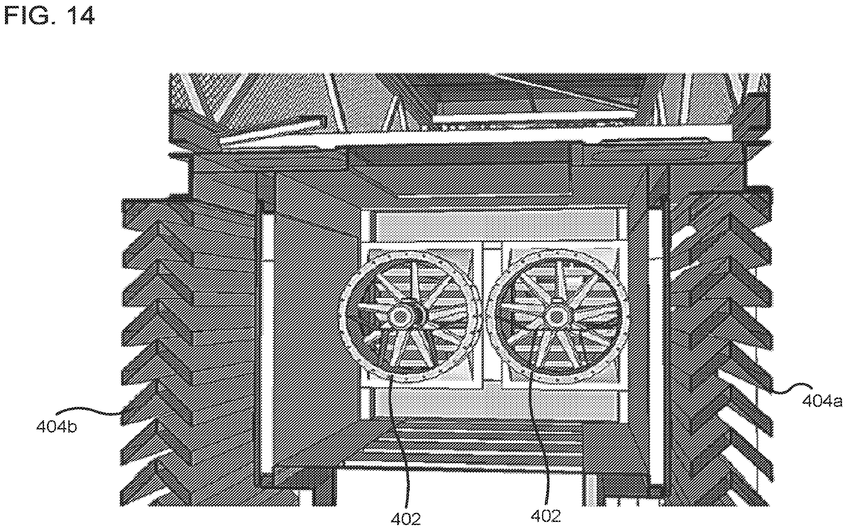

The louvers 404 are also movable relative to the sidewalls 420 between a first configuration and a second configuration. FIG. 14 shows the first louver 404a in a first configuration in which the first sidewall 420a is in the first configuration and disposed proximal to the roof 414 and floor 412. The louver 404a is disposed proximal to the fans 402 such that little or no space is present between the fans 402 and the first louver 404a. In contrast, the second louver 404b is in a second configuration in which the second sidewall 420b is in the second configuration and disposed distal to the roof 414 and the floor 412. A space exists in the second configuration between the fans 402 and the second louver 404b. The space can be accessed by service personnel to perform maintenance work on the fans 402.

Thus, the container 400 can be shipped with the louvers 404 in the first configuration such that the louvers 404 are flush with sidewalls 420 in the first configuration and the container has the first width w₁ (e.g., same as the width of a standard ISO container). Furthermore, once the sidewalls 420 are moved into the second configuration to increase the width of the container 400 from the first width w₁ to the second width w₂, the louvers 404 can also be moved to the second configuration. A space then exists between the fans 402 and the lovers 404 allowing service personnel access to the fans 402. Each of the louvers 404 can be pivotally mounted on the housing 410 such that the louvers 404 can be pivotally moved relative to the sidewalls 420 to allow access to the space.

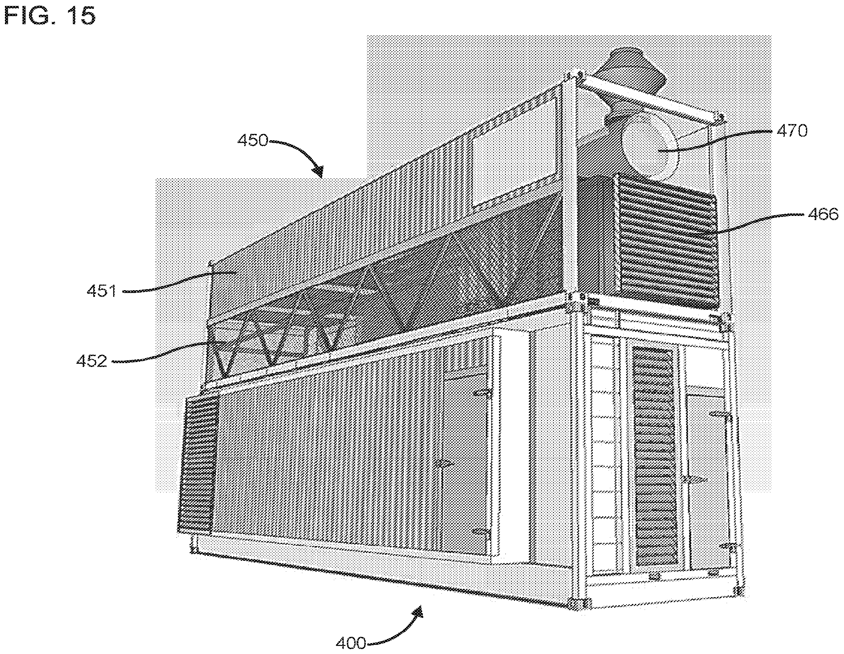

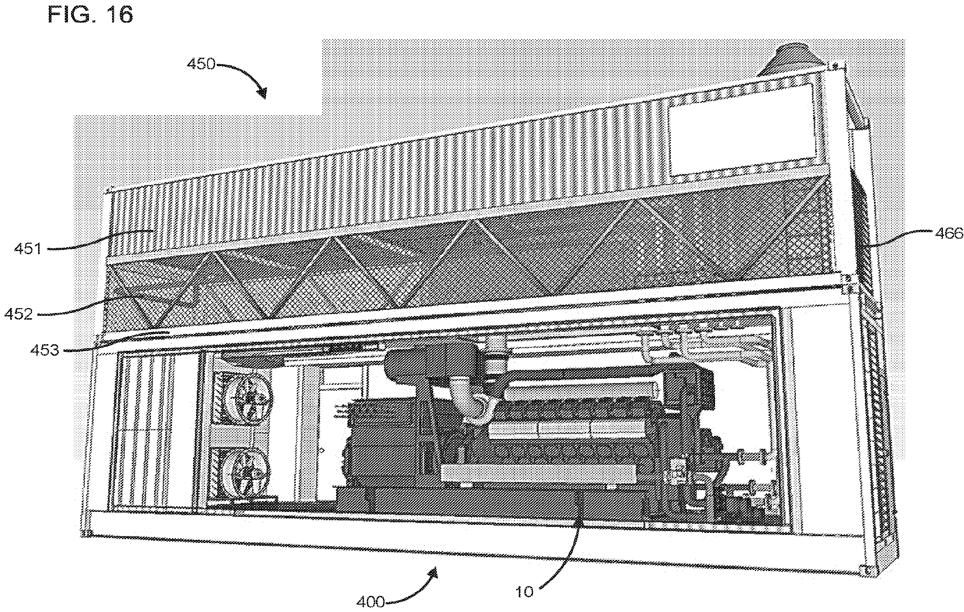

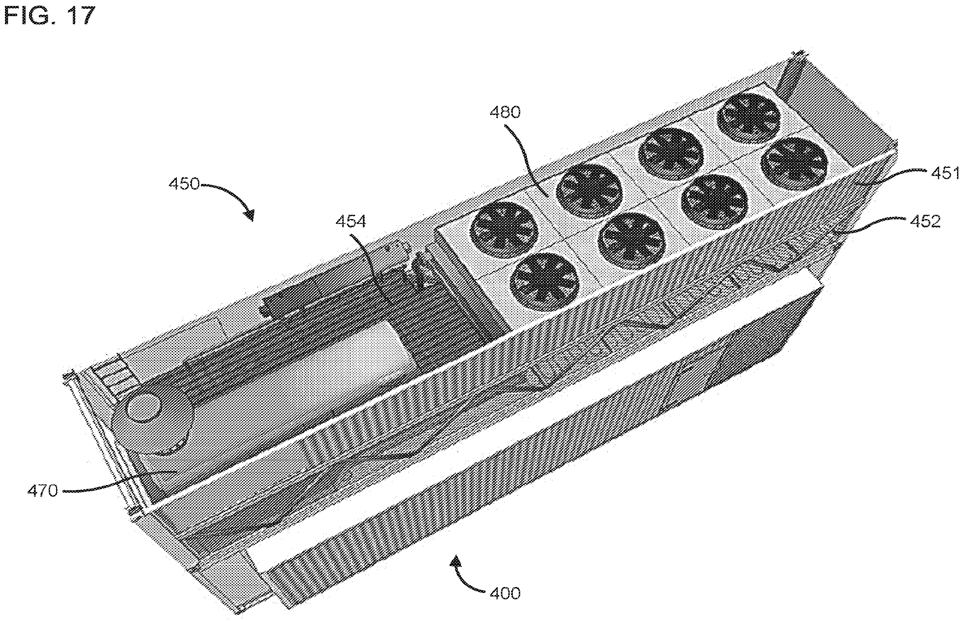

In some embodiments, a genset container can include a ventilation module which can include all components for providing ventilation and other auxiliary services to the container and a genset disposed in the container. Referring now to FIGS. 15-20, a ventilation module 450 for a genset container comprises a housing 451, a discharge plenum 460, an aftertreatment system 470, and a radiator 480 disposed on the housing 451. The ventilation module 450 can also include an expansion tank (not shown), coolant pipework, and flexible connections to allow for misalignment on prefabricated pipework.

The ventilation module 450 is disposed on a roof 414 of the container 400 described herein and is fluidically coupled to the internal volume of the container 400 as described herein. In other embodiments, the ventilation module 450 can disposed on any other genset container (e.g., the container 100, 200, 300, or any other container described herein).

The housing 451 defines an internal volume and includes a floor 453, a roof 454, and a plurality of sidewalls 452. The floor 453 of the housing 451 is disposed on the roof 454 of the container 400. In particular embodiments, the housing 451 can have a width which is the same as the width of the roof 414 the container 400 in its first configuration (e.g., the same width as a standard ISO container such as 2.4 meters). Thus, the ventilation module 450 can be disposed on the container 400, for shipping as an over height ISO container or shipped separated as own ISO container and stacked and assembled on site, which can generally be shipped using the same protocols and shipping vessels, albeit with marginally higher shipping costs.

Standardized interfaces and interface locations can be provided for the ventilation module and other auxiliary equipment to enable differing engines/gensets, ventilation, and other auxiliary equipment to be interchanged and reused. It is further noted that removable, or slideable access panels covering these interfaces can be provided and closed for transport and opened at installation site to provide access to the interfaces and general access between the stacked containers. In various embodiments, these roof and floor access panels can then be reused to form roof, floor, or side panels for the expanded enclosure by being slid over on rails or moved and bolted in place in the new position.

At least a portion 452 of the plurality of sidewalls 451 include a plurality of openings which are structured to communicate air into the internal volume of the housing 451. As shown in FIGS. 15-18, the portion 452 of the sidewall 451 includes a netting or a mesh (e.g., a wire mesh) to allow air to flow into the internal volume and cool the discharge plenum 460 or other components disposed within the internal volume.

An aftertreatment system 470 is disposed on the roof 454 of the housing 451. The aftertreatment system is configured to receive an exhaust gas from the genset 10 disposed within the internal volume of the genset container 400 via an exhaust pipe 12, and treat the exhaust gas. The aftertreatment system 470 can include any components for treating the exhaust gas (e.g., a diesel exhaust gas), for example, filter, selective catalytic reduction system, oxidation catalyst, etc. The aftertreatment system can also include a silencer for suppressing operational noise of the genset 10. A weather proof stack is also mounted on the aftertreatment system and can provide additional silencing.

A radiator 480 is disposed on the roof 454 of the ventilation module 450 and is configured to cool the genset 10. The radiator 480 can include any suitable radiator which is fluidically coupled to a cooling fluid line of the genset 10. The radiator 480 can receive a cooling fluid from the genset 10 and cool the cooling fluid which is then communicated back to the genset 10.

The discharge plenum 460 is disposed in the internal volume defined by the housing 451. The discharge plenum 460 includes an inlet 462, a plenum portion 464, and an outlet 466. The inlet 462 is fluidly coupled to the internal volume of the container 400 such that the plenum portion 464 is in fluidic communication with the internal volume of the container 400 via the inlet 462. The discharge plenum 460 is disposed in the internal volume of the housing 451 such that the inlet 462 is disposed over the genset 10.

The inlet 462 is sized and shaped to receive an exhaust pipe 12 or otherwise exhaust manifold of the genset 10. At least a portion of the exhaust pipe 12 is disposed within the plenum portion 464 through the inlet 462. The exhaust pipe 12 is coupled to the aftertreatment system 470 through a sidewall of the discharge plenum 460. The inlet 462 and the discharge plenum 460 are sized and shaped to receive an exhaust pipe or otherwise exhaust manifold of any other genset irrespective of the size or shape of the exhaust pipe or manifold.

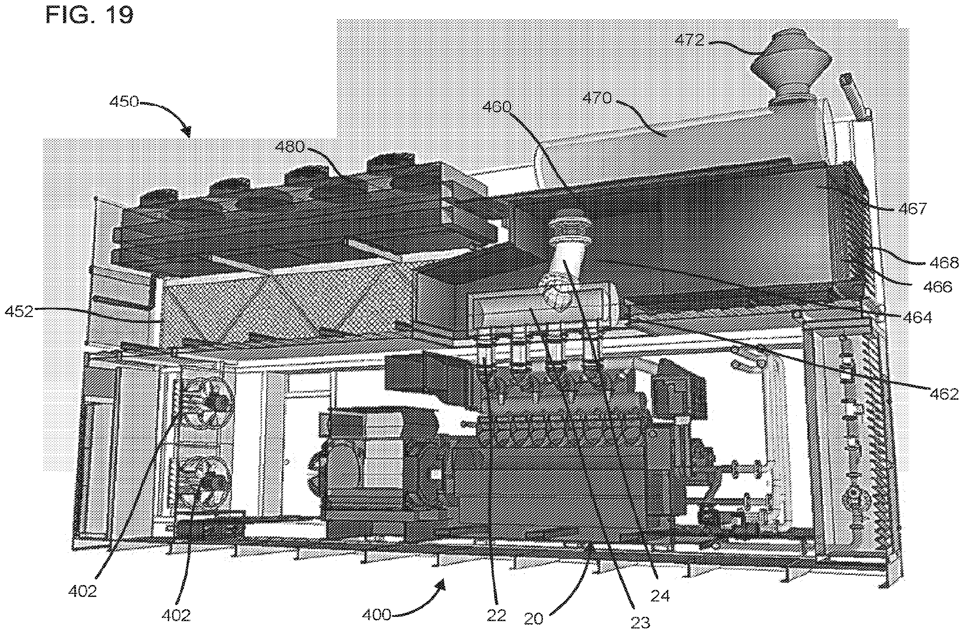

For example, the genset 10 includes the single bent exhaust pipe 12 disposed through the inlet 462 and the plenum portion 464. FIG. 19 shows a genset 20 according to another embodiment disposed in the container 400. The genset 20 includes a different configuration of exhaust pipes and manifolds from the genset 10. The genset 20 includes a plurality of first exhaust pipes 22 coupled to an exhaust manifold 23. At least a portion of the exhaust manifold 23 is disposed through the inlet 462 in the plenum portion 464. A second exhaust pipe 24 is disposed within the plenum portion 464 and fluidly coupled to the exhaust manifold 23 and the aftertreatment system 470 to communicate exhaust gas from the exhaust manifold 23 to the aftertreatment system 470.

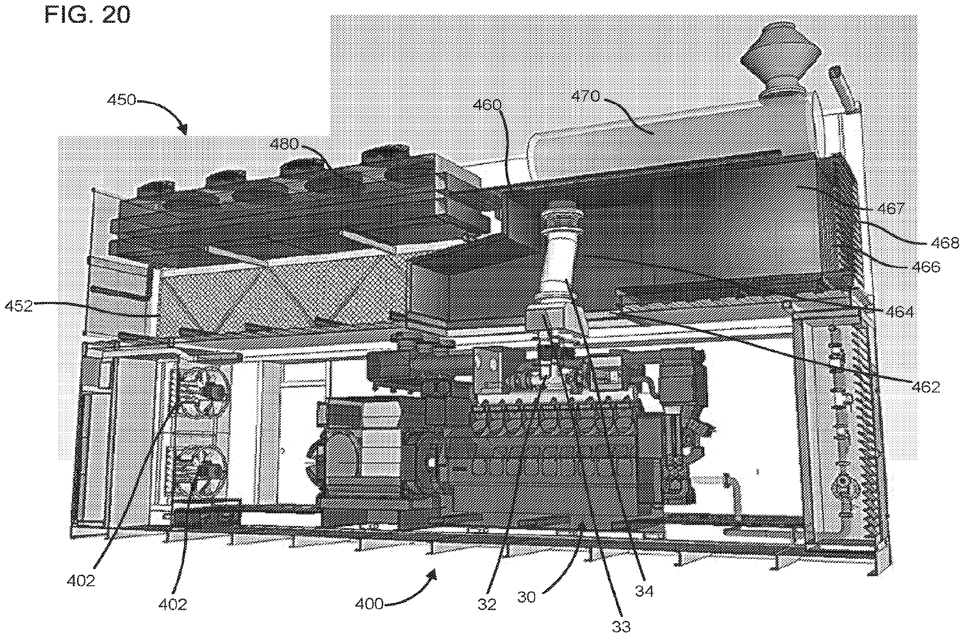

FIG. 20 shows a genset 30 according to yet another embodiment disposed in the container 400. The genset 30 includes still another configuration of exhaust piping or otherwise manifolds. A plurality of first exhaust pipes 32 are disposed in the internal volume of the container 400. The first exhaust pipes 32 are fluidly coupled to an exhaust manifold 33, at least a portion of which is disposed through the inlet 462 in the plenum portion 464. A second exhaust pipe 34 is disposed within the plenum portion 464 and fluidly coupled to the exhaust manifold 33 and the aftertreatment system 470 to communicate exhaust gas from the exhaust manifold 33 to the aftertreatment system 470.

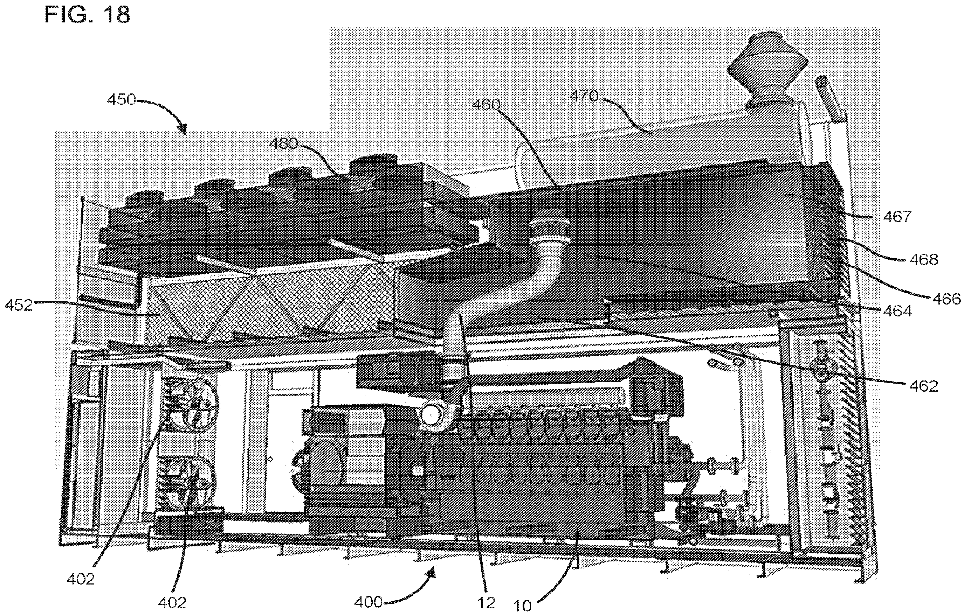

The discharge plenum 460 is sized and shaped to extract heat directly from the genset (e.g., the genset 10, 20, 30 or any other genset) which is major heat source inside the container 400, via natural convention. Hot air in the container around the genset rises into the plenum portion 464 of the discharge plenum 460 though the inlet 462. The hot air is replaced by cool air drawn in by the fans 402 (FIGS. 18-21). The hot air is expelled by the discharge plenum 460 to the outside environment via an outlet 466 of the discharge plenum 460. An attenuator 467 is disposed in a portion of the plenum portion 464 to reduce noise while ensuring minimum resistance. Furthermore, a discharge louver 468 is disposed at the outlet 466 and is sized for minimum air resistance.

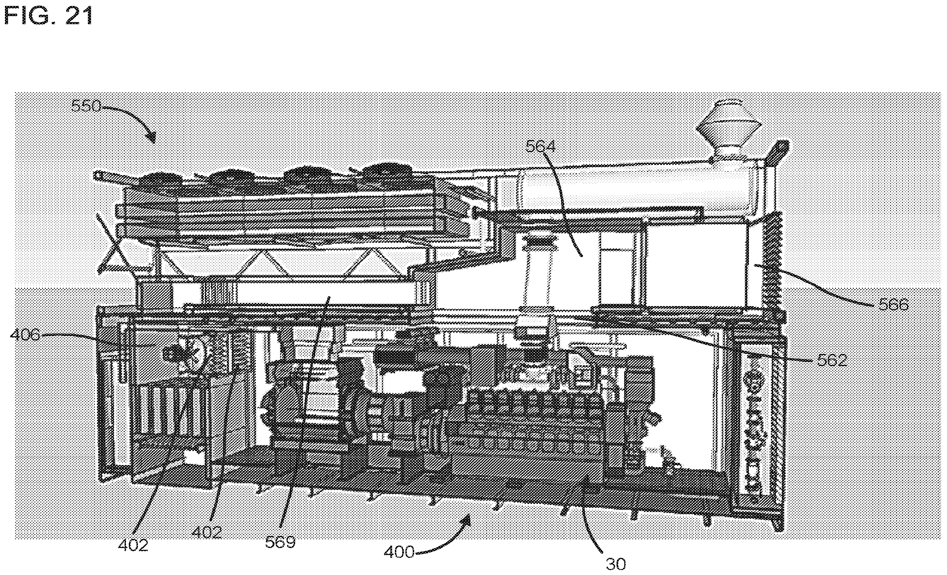

In particular embodiments, a ventilation module can be configured to recirculate at least a portion of the air being discharged by the discharge plenum 460 back into the internal volume of the genset container 400, for example, to maintain temperature in the genset container 400 in extreme cold conditions. FIG. 21 shows an embodiment of a ventilation module 550. The ventilation module 550 includes a housing 551 defining an internal volume. The ventilation module 550 includes components which are substantially similar to components of the ventilation module 450 except that a recirculation duct 569 is coupled to a discharge plenum 560 of the ventilation module 550.

The discharge plenum 560 includes an inlet 562, a plenum portion 564, and an outlet 566. The discharge plenum 560 is substantially similar to the discharge plenum 460 and therefore not described in further detail herein. The recirculation duct 569 is disposed within the internal volume defined by the housing 551 of the ventilation module 550. A first end of the recirculation duct 569 is in fluidic communication with the discharge plenum 560. A second end of the recirculation duct 569 is in fluidic communication with an intake plenum 406 of the intake fans 402 disposed in the genset container 400.

The recirculation duct 569 is structured to receive at least a portion of the air being discharged by the plenum portion 564 and recirculate the portion of the air to the intake plenum 406. This is particularly beneficial in extreme climates (e.g., extremely cold climates) to maintain a temperature within the genset container 400 and reduce a heating load in the container thereby, reducing energy consumption.

As used herein, the terms "about" and "approximately" generally mean plus or minus 10% of the stated value. For example, about 0.5 would include 0.45 and 0.55, about 10 would include 9 to 11, about 1000 would include 900 to 1100.

As used herein, the singular forms "a", "an" and "the" include plural referents unless the context clearly dictates otherwise. Thus, for example, the term "a member" is intended to mean a single member or a combination of members, "a material" is intended to mean one or more materials, or a combination thereof.

It should be noted that the term "exemplary" as used herein to describe various embodiments is intended to indicate that such embodiments are possible examples, representations, and/or illustrations of possible embodiments (and such term is not intended to connote that such embodiments are necessarily extraordinary or superlative examples).

The terms "coupled," "connected," and the like as used herein mean the joining of two members directly or indirectly to one another. Such joining may be stationary (e.g., permanent) or moveable (e.g., removable or releasable). Such joining may be achieved with the two members or the two members and any additional intermediate members being integrally formed as a single unitary body with one another or with the two members or the two members and any additional intermediate members being attached to one another.

It is important to note that the construction and arrangement of the various exemplary embodiments are illustrative only. Although only a few embodiments have been described in detail in this disclosure, those skilled in the art who review this disclosure will readily appreciate that many modifications are possible (e.g., variations in sizes, dimensions, structures, shapes and proportions of the various elements, values of parameters, mounting arrangements, use of materials, colors, orientations, etc.) without materially departing from the novel teachings and advantages of the subject matter described herein. Other substitutions, modifications, changes and omissions may also be made in the design, operating conditions and arrangement of the various exemplary embodiments without departing from the scope of the present invention, as defined by the appended claims.

## Claims

1. A container (400) configured to house a genset (10) for shipping, the container comprising:
a housing (410) defining an internal volume for accommodating a genset (10), the housing comprising:
a floor (412);
a roof (414); and
a plurality of sidewalls (420),
**characterized by**:
a first slat (422) pivotally coupled to the floor (412); and
a second slat (423) slidably coupled to the roof (414),
wherein at least one sidewall (420) of the plurality of sidewalls is coupled to the second slat (423) and movable therewith relative to the floor (412) and the roof (414) between:
a first configuration, in which a portion of the housing has a first width (w₁) corresponding to a width of an International Standard Organization container, wherein in the first configuration, the first slat (422) is disposed in a normal orientation to the floor (412), the second slat (423) is disposed parallel to and overlapping the roof (414) and the sidewall is disposed proximal to the floor and the roof such that the portion of the housing has the first width (w₁); and
a second configuration, in which the portion of the housing has a second width (w₂) greater than the first width, wherein in the second configuration the first slat (422) is disposed parallel to the floor (412), the first slat not overlapping the floor and forming a work platform adjacent to the floor, the second slat (423) disposed parallel to the roof (414), the second slat not overlapping the roof, the second slat forming a work platform roof adjacent to the roof of the housing, the sidewall (420) disposed distal to the roof and floor such that the portion of the housing has the second width (w₂).

2. The container of claim 1, wherein the first width conforms to a width of an International Standard Organization 6346 container.

3. The container of claim 1 or 2, wherein at least one sidewall of the plurality of sidewalls comprises:
a panel (222) pivotally coupled to the floor, wherein in the first configuration the panel is disposed in a normal orientation relative to the floor such that the portion of the housing has the first width, and in the second configuration the panel is disposed parallel to the floor such that an opening is defined in the sidewall, the panel forming a work platform such that the portion of the housing has the second width; and
an enclosure (230) disposed over the opening in the second configuration to provide an enclosed work area around the work platform adjacent to the internal volume of the housing.

4. The container of claim 3, wherein the panel is a first panel, and wherein the at least one sidewall further comprises:
a second panel pivotally coupled to the roof,
wherein in the first configuration the second panel is disposed in a normal orientation relative to the roof such that the portion of the housing has the first width, and
wherein in the second configuration the second panel is disposed parallel to the roof so that the opening is defined in the sidewall, the second panel forming the work platform roof of the first panel.

5. The container of claim 3 or 4, wherein the enclosure includes at least one door structured to allow a user to access the internal volume of the container.

6. The container of any of the preceding claims, further comprising:
a plurality of panels disposed between the floor and roof on each end of the sidewalls not in contact with the floor and the roof in the second configuration, the plurality of panels structured to enclose the ends of sidewall, and
wherein at least one louver is disposed in the sidewall, the louver movable with the sidewalls between the first configuration and the second configuration.

7. A container according to any of the preceding claims, the container comprising a ventilation module (450), the ventilation module comprising:
a ventilation housing (451) defining a ventilation internal volume, the ventilation housing comprising:
a ventilation floor (453) structured to be disposed on the roof of the housing,
a ventilation roof (454),
a plurality of sidewalls (452), and
a discharge plenum (460) disposed in the ventilation internal volume, the discharge plenum including an inlet, a plenum portion and an outlet, the plenum portion in fluidic communication with the internal volume of the housing via the inlet, the discharge plenum structured to discharge air from the internal volume of the housing into the environment via the outlet.

8. The container of claim 7, further comprising:
a duct disposed within the ventilation internal volume of the ventilation housing, a first end of the duct in fluidic communication with the discharge plenum, a second end of the duct in fluidic communication with an intake plenum of at least one intake fan disposed in the genset container, the duct structured to receive at least a portion of the air being discharged by the discharge plenum and recirculate the portion of the air to the intake plenum.

9. The container of claim 7 or 8, wherein at least a portion of the plurality of ventilation sidewalls of the ventilation housing include a plurality of openings, the plurality of openings structured to communicate air into the ventilation internal volume of the ventilation housing.

10. The container of claim 7, 8 or 9 wherein an aftertreatment system is positioned on the ventilation roof of the ventilation housing and structured to receive an exhaust gas from a genset positioned within the internal volume of the container via an exhaust pipe, at least a portion of the exhaust pipe positioned within the plenum portion through the inlet, the exhaust pipe fluidly coupled to the aftertreatment system through the ventilation roof of the housing.

11. A container according to any of the preceding claims, further comprising a plurality of supports (127) structured to support the first slat (422) in the second configuration.

12. A container according to any of the preceding claims,
wherein the housing (410) is configured to house a genset (10) having dimensions which fall within the width requirements of an International Standard Organization container in a manner such that, when the housing is in the first configuration, the first width (w₁) is not sufficient for a user to enter the internal volume of the housing for accessing a genset (10) disposed within the housing, and
wherein the second width (w₂) is sufficient for the user to enter the internal volume for accessing the genset (10).

13. A genset assembly comprising:
a container (400) according to any of the preceding claims, and
a genset (10) disposed within the housing (410).

## Patentansprüche

1. Container (400), der dafür konfiguriert ist, ein Aggregat (10) für den Versand aufzunehmen, wobei der Container Folgendes umfasst:
ein Gehäuse (410), das ein Innenvolumen zum Aufnehmen eines Aggregats (10) definiert, wobei das Gehäuse Folgendes umfasst:
einen Boden (412);
ein Dach (414); und
eine Vielzahl von Seitenwänden (420),
**gekennzeichnet durch**:
eine erste Leiste (422), die schwenkbar mit dem Boden (412) verbunden ist; und
eine zweite Leiste (423), die verschiebbar mit dem Dach (414) verbunden ist,
wobei mindestens eine Seitenwand (420) der Vielzahl von Seitenwänden mit der zweiten Leiste (423) gekoppelt und damit relativ zum Boden (412) und dem Dach (414) beweglich ist zwischen:
einer ersten Konfiguration, bei der ein Teil des Gehäuses eine erste Breite (w₁) aufweist, die einer Breite eines Containers der International Standard Organization entspricht; wobei in der ersten Konfiguration die erste Leiste (422) in einer normalen Ausrichtung zum Boden (412) angeordnet ist, wobei die zweite Leiste (423) parallel zum Dach (414) angeordnet ist und es überlappt, und die Seitenwand proximal zum Boden und zum Dach angeordnet ist, so dass der Teil des Gehäuses die erste Breite (w₁) aufweist, und
einer zweiten Konfiguration, bei der der Teil des Gehäuses eine zweite Breite (w₂) aufweist, die größer als die erste Breite ist, wobei in der zweiten Konfiguration die erste Leiste (422) parallel zum Boden (412) angeordnet ist, wobei die erste Leiste den Boden nicht überlappt und eine Arbeitsplattform neben dem Boden bildet, wobei die zweite Leiste (423) parallel zum Dach (414) angeordnet ist, wobei die zweite Leiste das Dach nicht überlappt, wobei die zweite Leiste ein Arbeitsplattformdach neben dem Dach des Gehäuses bildet, wobei die Seitenwand (420) distal zum Dach und zum Boden angeordnet ist, so dass der Teil des Gehäuses die zweite Breite (w₂) aufweist.

2. Container nach Anspruch 1, wobei die erste Breite einer Breite eines Containers der International Standard Organization 6346 entspricht.

3. Container nach Anspruch 1 oder 2, wobei mindestens eine Seitenwand der Vielzahl von Seitenwänden Folgendes umfasst:
eine Platte (222), die schwenkbar mit dem Boden verbunden ist, wobei in der ersten Konfiguration die Platte in einer normalen Ausrichtung relativ zum Boden angeordnet ist, so dass der Teil des Gehäuses die erste Breite aufweist, und in der zweiten Konfiguration die Platte parallel zum Boden angeordnet ist, so dass eine Öffnung in der Seitenwand definiert ist, wobei die Platte eine Arbeitsplattform bildet, so dass der Teil des Gehäuses die zweite Breite aufweist; und
eine Einhausung (230), die in der zweiten Konfiguration über der Öffnung angeordnet ist, um einen geschlossenen Arbeitsbereich um die Arbeitsplattform neben dem Innenvolumen des Gehäuses bereitzustellen.

4. Container nach Anspruch 3, wobei die Platte eine erste Platte ist und wobei die mindestens eine Seitenwand ferner Folgendes umfasst:
eine zweite Platte, die schwenkbar mit dem Dach verbunden ist,
wobei in der ersten Konfiguration die zweite Platte in einer normalen Ausrichtung relativ zum Dach angeordnet ist, so dass der Teil des Gehäuses die erste Breite aufweist, und
wobei in der zweiten Konfiguration die zweite Platte parallel zum Dach angeordnet ist, so dass die Öffnung in der Seitenwand definiert ist, wobei die zweite Platte das Arbeitsplattformdach der ersten Platte bildet.

5. Container nach Anspruch 3 oder 4, wobei die Einhausung mindestens eine Tür umfasst, die so strukturiert ist, dass ein Benutzer auf das interne Volumen des Containers zugreifen kann.

6. Container nach einem der vorhergehenden Ansprüche, der ferner Folgendes umfasst:
eine Vielzahl von Platten, die zwischen dem Boden und dem Dach an jedem Ende der Seitenwände angeordnet sind, die in der zweiten Konfiguration nicht mit dem Boden und dem Dach in Kontakt stehen, wobei die Vielzahl von Platten so strukturiert ist, dass sie die Enden der Seitenwand einschließen, und
wobei mindestens eine Luftklappe in der Seitenwand angeordnet ist, wobei die Luftklappe mit den Seitenwänden zwischen der ersten Konfiguration und der zweiten Konfiguration beweglich ist.

7. Container nach einem der vorhergehenden Ansprüche, wobei der Container ein Belüftungsmodul (450) umfasst, wobei das Belüftungsmodul Folgendes umfasst:
ein Belüftungsgehäuse (451), das ein Belüftungsinnenvolumen definiert, wobei das Belüftungsgehäuse Folgendes umfasst:
einen Belüftungsboden (453), der so strukturiert ist, dass er auf dem Dach des Gehäuses angeordnet ist,
ein Belüftungsdach (454),
eine Vielzahl von Seitenwänden (452) und
eine Entladungskammer (460), die in dem Belüftungsinnenvolumen angeordnet ist, wobei die Entladungskammer einen Einlass, einen Kammerabschnitt und einen Auslass umfasst, wobei der Kammerabschnitt über den Einlass in Fluidverbindung mit dem Innenvolumen des Gehäuses steht, wobei die Entladungskammer so strukturiert ist, dass sie Luft aus dem Innenvolumen des Gehäuses über den Auslass in die Umgebung ablässt.

8. Container nach Anspruch 7, der ferner Folgendes umfasst:
einen Kanal, der innerhalb des Belüftungsinnenvolumens des Belüftungsgehäuses angeordnet ist, wobei ein erstes Ende des Kanals in Fluidverbindung mit der Auslasskammer steht, wobei ein zweites Ende des Kanals in Fluidverbindung mit einer Einlasskammer von mindestens einem Einlassventilator steht, der in dem Aggregatbehälter angeordnet ist, wobei der Kanal so strukturiert ist, dass er mindestens einen Teil der Luft aufnimmt, die von der Auslasskammer abgegeben wird, und den Teil der Luft in die Einlasskammer zurückführt.

9. Container nach Anspruch 7 oder 8, wobei mindestens ein Teil der Vielzahl von Belüftungsseitenwänden des Belüftungsgehäuses eine Vielzahl von Öffnungen umfasst, wobei die Vielzahl von Öffnungen so strukturiert ist, dass Luft in das Belüftungsinnenvolumen des Belüftungsgehäuses geleitet wird.

10. Container nach Anspruch 7, 8 oder 9, wobei ein Nachbehandlungssystem auf dem Belüftungsdach des Belüftungsgehäuses positioniert ist und so strukturiert ist, dass ein Abgas von einem Aggregat, das sich im Innenvolumen des Containers befindet, über ein Abgasrohr aufgenommen wird, wobei mindestens ein Teil des Abgasrohrs innerhalb des Kammerabschnitts durch den Einlass positioniert ist, wobei das Abgasrohr durch das Belüftungsdach des Gehäuses fluidisch mit dem Nachbehandlungssystem verbunden ist.

11. Container nach einem der vorhergehenden Ansprüche, der ferner Vielzahl von Stützen (127) umfasst, die so strukturiert sind, dass sie die erste Leiste (422) in der zweiten Konfiguration tragen.

12. Container nach einem der vorhergehenden Ansprüche,
wobei das Gehäuse (410) dafür konfiguriert ist, ein Aggregat (10) mit Abmessungen, die innerhalb der Breitenanforderungen eines Containers der International Standard Organization liegen, in einer Weise aufzunehmen, dass, wenn das Gehäuse die erste Konfiguration aufweist, die erste Breite (w₁) nicht ausreicht, dass ein Benutzer das Innenvolumen des Gehäuses betreten kann, um auf ein im Gehäuse angeordnetes Aggregat (10) zuzugreifen, und
wobei die zweite Breite (w₂) ausreicht, dass der Benutzer das Innenvolumen für den Zugriff auf das Aggregat (10) betreten kann.

13. Aggregatanordnung, die Folgendes umfasst:
einen Container (400) gemäß einem der vorhergehenden Ansprüche und
ein Aggregat (10), das in dem Gehäuse (410) angeordnet ist.

## Revendications

1. Conteneur (400) configuré pour loger un groupe électrogène (10) à des fins d'expédition, le conteneur comportant :
un logement (410) définissant un volume interne à des fins de réception d'un groupe électrogène (10), le logement comportant :
un plancher (412) ;
un toit (414) ; et
une pluralité de parois latérales (420),
**caractérisé par** :
une première latte (422) accouplée de manière pivotante au plancher (412) ; et
une deuxième latte (423) accouplée de manière coulissante au toit (414),
dans lequel au moins une paroi latérale (420) de la pluralité de parois latérales est accouplée à la deuxième latte (423) et est mobile avec celle-ci par rapport au plancher (412) et au toit (414) entre :
une première configuration, dans laquelle une partie du logement a une première largeur (w₁) correspondant à une largeur d'un conteneur de l'Organisation Internationale de Normalisation, dans lequel, dans la première configuration, la première latte (422) est disposée selon une orientation normale par rapport au plancher (412), la deuxième latte (423) est disposée de manière parallèle par rapport au toit (414) et chevauchant celui-ci et la paroi latérale est disposée de manière proximale par rapport au plancher et au toit de telle sorte que la partie du logement a la première largeur (w₁) ; et
une deuxième configuration, dans laquelle la partie du logement a une deuxième largeur (w₂) supérieure par rapport à la première largeur, dans lequel, dans la deuxième configuration, la première latte (422) est disposée de manière parallèle par rapport au plancher (412), la première latte ne chevauchant pas le plancher et formant une plate-forme de travail adjacente par rapport au plancher, la deuxième latte (423) étant disposée de manière parallèle par rapport au toit (414), la deuxième latte ne chevauchant pas le toit, la deuxième latte formant un toit de plate-forme de travail adjacent par rapport au toit du logement, la paroi latérale (420) étant disposée de manière distale par rapport au toit et au plancher de telle sorte que la partie du logement a la deuxième largeur (w₂).

2. Conteneur selon la revendication 1, dans lequel la première largeur est conforme à une largeur d'un conteneur 6346 de l'Organisation Internationale de Normalisation.

3. Conteneur selon la revendication 1 ou la revendication 2, dans lequel au moins une paroi latérale de la pluralité de parois latérales comporte :
un panneau (222) accouplé de manière pivotante au plancher, dans lequel, dans la première configuration, le panneau est disposé selon une orientation normale par rapport au plancher de telle sorte que la partie du logement a la première largeur, et dans la deuxième configuration, le panneau est disposé de manière parallèle par rapport au plancher de telle sorte qu'une ouverture est définie dans la paroi latérale, le panneau formant une plate-forme de travail de telle sorte que la partie du logement a la deuxième largeur ; et
une enceinte (230) disposée par-dessus l'ouverture dans la deuxième configuration pour fournir une zone de travail fermée autour de la plate-forme de travail adjacente par rapport au volume interne du logement.

4. Conteneur selon la revendication 3, dans lequel le panneau est un premier panneau, et dans lequel ladite au moins une paroi latérale comporte en outre :
un deuxième panneau accouplé de manière pivotante au toit,
dans lequel, dans la première configuration, le deuxième panneau est disposé selon une orientation normale par rapport au toit de telle sorte que la partie du logement a la première largeur, et
dans lequel, dans la deuxième configuration, le deuxième panneau est disposé de manière parallèle par rapport au toit de telle sorte que l'ouverture est définie dans la paroi latérale, le deuxième panneau formant le toit de plate-forme de travail du premier panneau.

5. Conteneur selon la revendication 3 ou la revendication 4, dans lequel l'enceinte comprend au moins une porte structurée pour permettre à un utilisateur d'accéder au volume interne du conteneur.

6. Conteneur selon l'une quelconque des revendications précédentes, comportant par ailleurs :
une pluralité de panneaux disposés entre le plancher et le toit sur chaque extrémité des parois latérales qui ne sont pas en contact avec le plancher et le toit dans la deuxième configuration, la pluralité de panneaux étant structurés pour renfermer les extrémités de la paroi latérale, et
dans lequel au moins une ventelle est disposée dans la paroi latérale, la ventelle étant mobile avec les parois latérales entre la première configuration et la deuxième configuration.

7. Conteneur selon l'une quelconque des revendications précédentes, le conteneur comportant un module de ventilation (450), le module de ventilation comportant :
un logement de ventilation (451) définissant un volume interne de ventilation, le logement de ventilation comportant :
un plancher de ventilation (453) structuré pour être disposé sur le toit du logement,
un toit de ventilation (454),
une pluralité de parois latérales (452), et
un plénum de décharge (460) disposé dans le volume interne de ventilation, le plénum de décharge comprenant une entrée, une partie de plénum et une sortie, la partie de plénum étant en communication fluidique avec le volume interne du logement par le biais de l'entrée, le plénum de décharge étant structuré pour décharger de l'air en provenance du volume interne du logement jusque dans l'environnement par le biais de la sortie.

8. Conteneur selon la revendication 7, comportant par ailleurs :
une canalisation disposée à l'intérieur du volume interne de ventilation du logement de ventilation, une première extrémité de la canalisation étant en communication fluidique avec le plénum de décharge, une deuxième extrémité de la canalisation étant en communication fluidique avec un plénum d'admission d'au moins un ventilateur d'admission disposé dans le conteneur de groupe électrogène, la canalisation étant structurée pour recevoir au moins une partie de l'air qui est déchargé par le plénum de décharge et pour faire recirculer la partie de l'air jusqu'au plénum d'admission.

9. Conteneur selon la revendication 7 ou la revendication 8, dans lequel au moins une partie de la pluralité de parois latérales de ventilation du logement de ventilation comprennent une pluralité d'ouvertures, la pluralité d'ouvertures étant structurées pour communiquer de l'air jusque dans le volume interne de ventilation du logement de ventilation.

10. Conteneur selon la revendication 7, la revendication 8 ou la revendication 9, dans lequel un système de traitement secondaire est positionné sur le toit de ventilation du logement de ventilation et structuré pour recevoir un gaz d'échappement en provenance d'un groupe électrogène positionné à l'intérieur du volume interne du conteneur par le biais d'un tuyau d'échappement, au moins une partie du tuyau d'échappement étant positionnée à l'intérieur de la partie de plénum au travers de l'entrée, le tuyau d'échappement étant accouplé de manière fluidique au système de traitement secondaire au travers du toit de ventilation du logement.

11. Conteneur selon l'une quelconque des revendications précédentes, comportant par ailleurs une pluralité de supports (127) structurés pour supporter la première latte (422) dans la deuxième configuration.

12. Conteneur selon l'une quelconque des revendications précédentes,
dans lequel le logement (410) est configuré pour loger un groupe électrogène (10) ayant des dimensions qui se trouvent dans les limites des exigences de largeur d'un conteneur de l'Organisation Internationale de Normalisation d'une telle manière que, quand le logement est dans la première configuration, la première largeur (w₁) n'est pas suffisante pour permettre à un utilisateur d'entrer dans le volume interne du logement à des fins d'accès au groupe électrogène (10) disposé à l'intérieur du logement, et
dans lequel la deuxième largeur (w₂) est suffisante pour permettre à l'utilisateur d'entrer dans le volume interne à des fins d'accès au groupe électrogène (10).

13. Ensemble formant groupe électrogène comportant :
un conteneur (400) selon l'une quelconque des revendications précédentes, et
un groupe électrogène (10) disposé à l'intérieur du logement (410).
